# EUROPEAN PATENT SPECIFICATION

(11) **EP 4 168 702 B1**
(45) Date of publication and mention of the grant of the patent: **29.10.2025**
(21) Application number: 21759124.7
(22) Date of filing: 18.06.2021
(51) Int. Cl.: F16L 55/105, E03B 7/07

(54) **PIPING SYSTEM INSERT COMPRISING AN ADAPTER FOR A PIPE ACCESS MEANS, AND METHOD FOR PIPING WORK**
ROHRLEITUNGSSYSTEMEINSATZ MIT EINEM ADAPTER FÜR EIN ROHRZUGANGSMITTEL UND VERFAHREN FÜR ROHRLEITUNGSARBEITEN
INSERT DE SYSTÈME DE TUYAUTERIE COMPRENANT UN ADAPTATEUR POUR UN MOYEN D'ACCÈS À UN TUYAU, ET PROCÉDÉ DE TRAVAIL DE TUYAUTERIE

(30) Priority: 18.06.2020 SE 2050734
(43) Date of publication of application: 26.04.2023
(73) Proprietor: Sjöberg, Stefan, 294 76 Sölvesborg (SE)
(72) Inventor: Sjöberg, Stefan, 294 76 Sölvesborg (SE)
(74) Representative: AWA Sweden AB
(86) International application number: PCT/IB2021/000407
(87) International publication number: WO 2021/255521

(56) References cited:
- EP-B1- 1 362 146
- GB-A- 2 472 265
- US-A- 4 478 251

## Description

### Technical Field

The present invention relates to a conduit insert comprising an adapter, said adapter comprising a liquid inlet and a liquid outlet and between these a chamber comprising a first planar end wall, into which the liquid inlet opens, and an opposite second planar end wall, which is parallel to the first the end wall and into which the liquid outlet opens, and an access opening extending from the first planar end wall of the chamber to the second planar end wall of the chamber, wherein a conduit access means is provided, which is slidable into and extractable out of the chamber via the access opening and comprises a first planar end face and an opposite second planar end face parallel to the first planar end face, wherein the first planar end face is arranged to abut tightly against the first planar end wall of the chamber around the liquid inlet by means of an elastic annular seal arranged in an annular groove in the first planar end face, and wherein the second planar end face is arranged to abut tightly against the second planar end wall of the chamber around the liquid outlet by means of an elastic annular seal arranged in an annular groove in the second planar end face.

The invention further relates to a method for piping work in a conduit insert, which is located in the ground and comprises a well pipe.

### Prior Art

From SE 516 230 C2 a conduit insert is known which reflects the preamble. The known conduit insert is intended to be located in the ground and is distinguished by the fact that it enables piping work, such as changing of a valve, through a simple extraction and insertion move from ground level via a well pipe.

### Object of the Invention

In practice, it has shown that the known conduit insert significantly facilitates piping work by making it possible to easy extract and insert a conduit access means, such as a valve. For this, however, it is required that the liquid supply to the conduit insert is stopped at another location, since flowing liquid risks disturbing placement of the annular seals. This causes leakage either because the annular seal is damaged or because it does not fit snugly as intended.

Against that background, the object of the invention is to improve the known conduit insert in such a way that its possibilities of use are extended and its function is improved.

### Summary of the Invention

According to the present invention this object is achieved by means of a conduit insert which comprises the features of the preamble and is characterized in that the elastic annular seals are permanently attached to the annular grooves to enable insertion and extraction of the conduit access means while pressurized liquid flows into the adapter and its chamber.

The solution according to the present invention has the advantages that it is easier to work with and that it is more robust and more reliable than the previous solution.

The elastic annular seals are permanently fixed in the annular grooves in the end faces in that the annular grooves are undercut with a narrower annular opening in the respective end face and a wider annular space below the respective end face, wherein the elastic annular seals are pressed into respective annular grooves past the narrower annular opening of the annular groove to be permanently retained in the wider annular space of the annular groove. It is understood that such a solution is easy to achieve and that it has the advantage that no glue or the like needs to be used to achieve the permanent retention.

Preferably, the elastic annular seals are O-rings which have a larger cross-section than the width of the opening of the annular groove. O-rings are extremely robust and are available in many different dimensions as standard. In other words, it is easy to find suitable seals on the market for this purpose.

In cross-section the space in the respective annular groove is preferably trapezoidal, with the narrower annular opening at the top and below a flat bottom, which is wider than the cross-section of an O-ring. An undercut annular groove designed in this way enables easy mounting and safe retainment of an O-ring.

According to a preferred embodiment, the chamber of the adapter comprises a first planar side wall extending between the two end walls of the chamber and an opposite second planar side wall extending between the two end walls of the chamber and parallel to the first side wall, wherein the access opening extends from the first planar side wall of the chamber to the second planar side wall of the chamber, wherein the conduit access means comprises a first planar side wall portion extending from the first end face of the conduit access means to the second end face of the conduit access means, and an opposite second planar side wall portion extending from the first end face of the conduit access means to the second end face of the conduit access means and parallel to the first side wall portion, and wherein on each side wall of the chamber beads are arranged near the end walls, which beads extend from the access opening into the chamber and are arranged to, when inserting the conduit access means into the chamber, be in contact with the side wall portions of the conduit access means to guide the conduit access means into place in the chamber. The side walls easily ensure that the conduit access means is guided into place inside the chamber when it is pushed into it, wherein the beads help to minimize friction and impact from contaminants, such as grains of sand, in the chamber. Incidentally, the latter purpose can also be served by a bottom pocket in the chamber under the conduit access means providing an extra space in the chamber for such contaminants.

Normally, the conduit adapter is intended to be used in a water supply system, the adapter being located in the ground and being tightly connected to a well pipe extending above ground level and having a diameter greater than the largest horizontal dimension of the conduit access means. In such a solution, the adapter can be located at a depth of, for example, 2 m in the ground and still, with the aid of a rod-shaped tool, enable easy handling of the conduit access means from ground level.

Preferably, a pipe, which on a side comprises a liquid outlet, is above ground connected to the well pipe. The advantage of this pipe is that it makes it possible to divert water from the well pipe when the well pipe during work is filled with liquid which flows into the adapter via the liquid inlet of the adapter.

Preferably, a plate of heat insulating material is removably inserted into the well pipe above the conduit access means. Through this simple measure, it is possible to reliably protect the conduit insert and possible connected units against frost.

According to one embodiment, the conduit access means may comprise a channel extending between the two end faces of the conduit access means, wherein a non-return valve is provided in the channel to allow or prevent flow of liquid from the fluid inlet of the adapter to the fluid outlet of the adapter. This solution is extremely simple and reliable and makes it possible to use one and the same conduit access means for two opposite objects. Alternatively, the two opposite objects could also be achieved by means of two different conduit access means, one of which has a continuous channel and one that lacks such a channel. And a third alternative, provided that the chamber of the adapter is substantially square, could consist of a similarly substantially square conduit access means, which in 90 degree rotational steps of one and the same conduit access means allows, respectively, prevents flow of liquid from the adapter inlet to the adapter fluid outlet.

According to another embodiment, the conduit access means comprises a closed wall portion, which is arranged in and blocks a channel, which extends between the two end surfaces of the conduit access means, wherein the conduit access means comprises connections connecting the channel with a pipe or a hose for directing a flow of liquid from the fluid inlet of the adapter to the fluid outlet of the adapter. A desired unit can be connected to such a pipe or hose, as for example a flow meter, which fits into the well pipe and preferably is remotely readable on site inside this pipe.

Alternatively, the pipe or hose is a flexible hose, which has such a length that a flow meter without disconnection of the flexible hose can be lifted out of the well pipe in order to enable manual reading.

It is also possible to connect a non-return valve to the pipe or hose in order to allow or prevent a flow of liquid from the liquid inlet of the adapter to the liquid outlet of the adapter, depending on the rotational position of the conduit access means. In other words, the non-return valve entails the same advantages as the previously mentioned non-return valve but entails the additional advantage that it can be combined with an additional unit, such as said flow meter.

The conduit insert of the present invention enables significantly simplified piping work when the conduit insert is located in the ground and includes a well pipe, thanks to a method which includes insertion and pulling of a conduit access means into and out of the adapter chamber while pressurized liquid is allowed to flow into the adapter and its chamber via the liquid inlet. In practice, this means that prior to such piping work, it is not necessary to locate a shut-off valve upstream of the conduit insert and instead the intended work can be started directly on site without delay.

As a step in the method according to the present invention, when a conduit access means is inserted into the chamber of the adapter, it is also possible to empty the well pipe of liquid from above, which can be done, for example, by means of a pump or wet vacuum cleaner.

### Brief Description of the Drawings

The invention is schematically illustrated in the accompanying drawings, in which:
Fig. 1 shows a conduit access means, half in a side view and half in a sectional view;
Fig. 2 shows the conduit access means in an end view;
Fig. 3 shows an adapter, half in a side view and half in a longitudinal sectional view;
Fig. 4 shows an adapter with a conduit access means inserted therein, half in a side view and in half in a longitudinal sectional view;
Fig. 5 shows an alternative embodiment of a conduit access means, half in a side view and half in a longitudinal sectional view;
Fig. 6 shows an alternative embodiment of a conduit access means in a longitudinal sectional view;
Fig. 7 shows an alternative embodiment of a conduit access means, half in a side view and half in a longitudinal sectional view;
Figs. 8 and 9 show a pipeline insert together with a well pipe partly in section and in two different positions of use; and
Figs. 10 and 11 show the adapter and the well pipe partly in section while the well pipe is filled with liquid via the adapter.

### Description of Preferred Embodiments

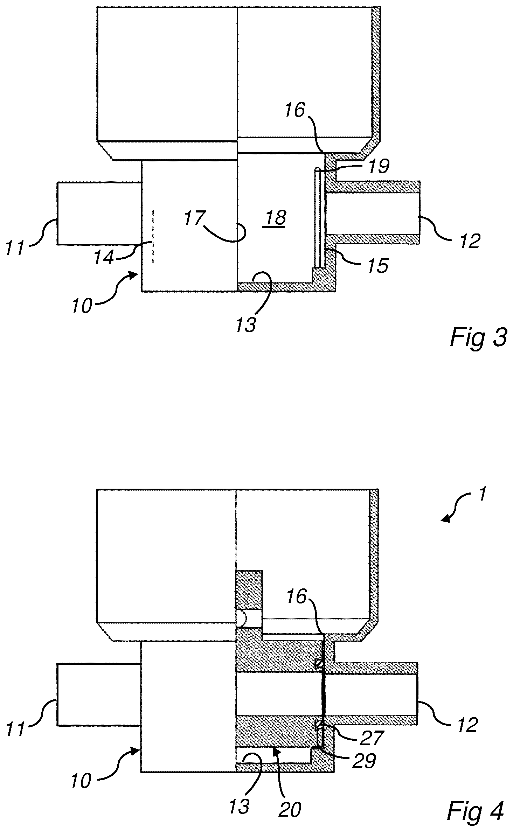

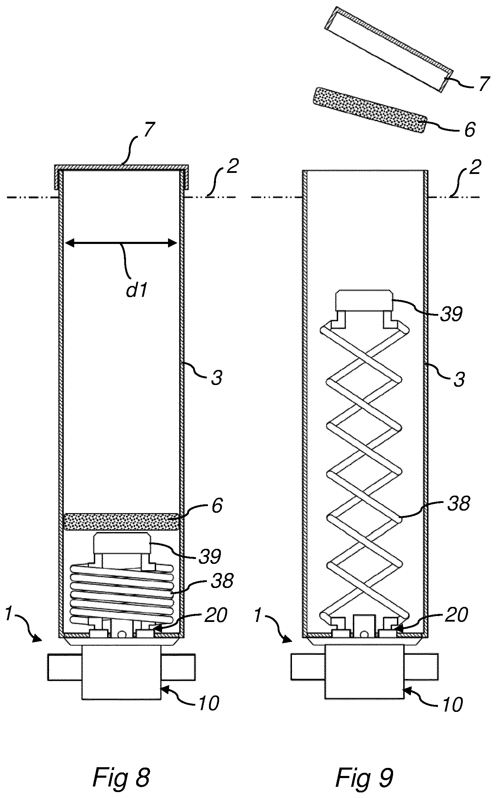

The conduit insert 1 according to the present invention is preferably intended for water supply systems and is preferably, as shown in Figs. 8-11, located in ground 2. Two components which are always included in the conduit insert 1 are in accordance with Fig. 4 an adapter 10, which has a liquid inlet 11 and a liquid outlet 12, which are connected to the water supply system, and a conduit access means 20, which is slidable into and extractable from a chamber 13 in the adapter 10 via an access opening 16 arranged at the top of the chamber 13.

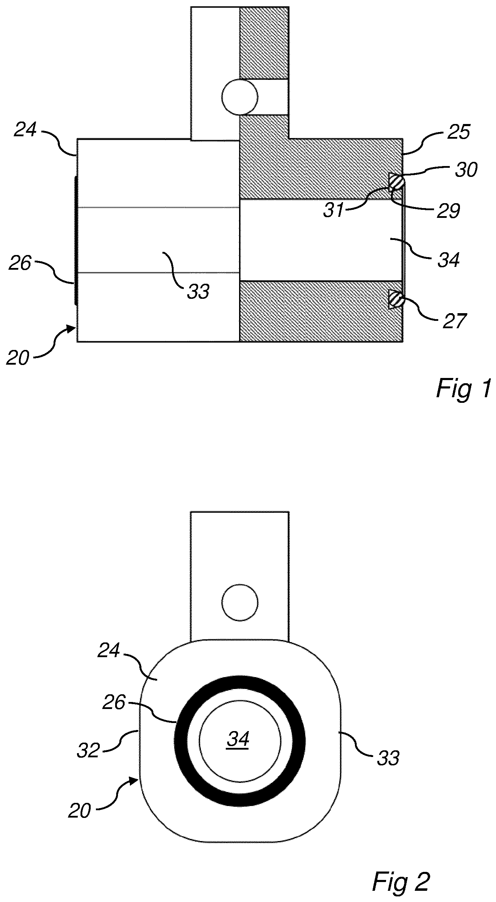

The conduit access means 20, which in different embodiments is shown separately in Figs. 1, 2 and 5-7, consists of a solid body of e.g. plastic and comprises a first planar end face 24 and an opposite second planar end face 25, which is parallel to the first planar end face 24. In the first planar end face 24 there is an annular groove 28, in which an elastic annular seal 26 in the form of an O-ring is arranged, and in the second end face 25 there is an annular groove 29, in which an elastic annular seal 27 in the form of an O-ring is arranged.

The annular grooves 28, 29 are trapezoidally undercut and have a narrower annular opening 30 in the respective end surface 24, 25 and below the respective end surface 24, 25 a wider annular space 31. The undercut makes it possible to permanently mount the annular seals 26, 27 without, for example, glue in the respective annular grooves 28, 29 by simply pressing the annular seals 26, 27 past the narrow annular openings 30 of the annular grooves 28, 29 into the wider annular spaces 31 of the annular grooves 28, 29.

The adapter 10 is shown separately only in Fig. 3, while in Figs. 4 and 8-11 it is shown together with other units. From Fig. 3 it can be seen that the adapter 10 comprises a housing, which is preferably made in one piece of plastic. It has on one side the above-mentioned liquid inlet 11 and opposite on the other side the above-mentioned liquid outlet 12. The liquid inlet 11 and the liquid outlet 12 open inside the adapter 10 into the chamber 13, which is rectangular in shape seen from above.

The chamber 13 is defined by a first planar end wall 14, in which the liquid inlet 11 opens substantially centrally, and an opposite second planar end wall 15, which is parallel to the first end wall 14 and in which the liquid outlet 12 opens substantially centrally. The chamber 13 is further defined by a first planar side wall 17, which extends between the two end walls 14, 15 of the chamber 13, and an opposite second planar side wall 18, which extends between the two end walls 14, 15 of the chamber 13 and is parallel to the first side wall 17.

On the respective side wall 17, 18 there are vertical beads 19 which are arranged near the end walls 14, 15. The beads 19 are arranged such that when inserting and extracting the conduit access means 20 into and out of the chamber 13 via the access opening 16 in contact with flat side wall portions 32, 33 on the conduit access means 20 the conduit access means 20 is guided in place inside the chamber 13 with minimal friction.

When inserting and extracting the conduit access means 20, which is suitably performed by means of a rod-shaped tool, which is not shown and which can engage with a key grip at the top of the conduit access means 20, not only the side wall portions 32, 33 slide along said beads 19 but also the end surfaces of the conduit access means 20 with their elastic annular seals 26, 27 along the respective end wall 14, 15 in the chamber 13. In this case the arrangement is such that, when the conduit access means 20 reaches the bottom of the chamber 13, the annular seals 26, 27 respectively are centered and tightly enclose each liquid inlet or liquid outlet mouth in the chamber 13.

According to a first embodiment, illustrated in Fig. 1, the conduit access means 20 comprises a central channel 34, which extends between the two end faces 24, 25 of the conduit access means 20 and opens centrally inside the respective annular seal 26, 27. Thus, through the channel 34, liquid can flow freely from the liquid inlet 11 of the adapter 10 to its liquid outlet 12, for example to release water to a property.

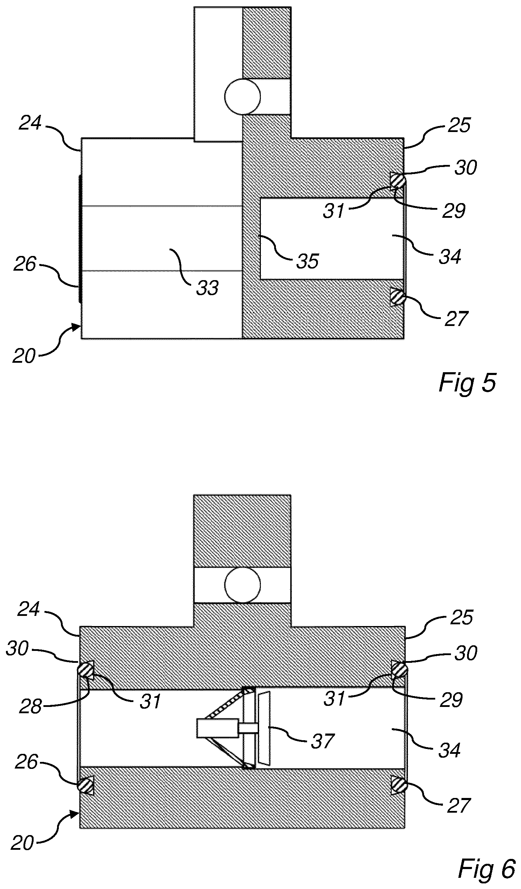

According to a second embodiment, illustrated in Fig. 5, the conduit access means 20 comprises a central channel 34, which between the two end faces 24, 25 of the conduit access means 20 is blocked by a wall 35. The wall 35 prevents liquid from flowing from the liquid inlet 11 to the liquid outlet 12 of the adapter 10, which means that this embodiment of the pipe access means 20 can, for example, be used to stop the supply of water to a property.

According to a third embodiment, illustrated in Fig. 6, the conduit access means 20 comprises a central channel 34, which extends between the two end faces 24, 25 of the conduit access means 20 and opens centrally inside the respective annular seal 26, 27. In the middle of the channel 34 there is a non-return valve 37, which is arranged to allow or prevent flow of liquid from the liquid inlet 11 of the adapter 10 to the liquid outlet 12 of the adapter 10 depending on the rotational position of the conduit access means 20. This embodiment of the conduit access means 20 can thus be used as a single unit to optionally, for example, allow or turn off supply of water to a property.

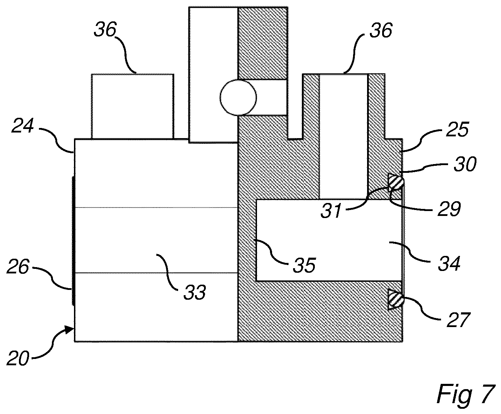

According to a fourth embodiment, illustrated in Fig. 7, the conduit access means 20 comprises a central channel 33, which extends between the two end faces 24, 25 of the conduit access means 20 and opens centrally inside the respective annaular seal 26, 27. In the middle of the channel 33 there is a wall 32, which is arranged in and blocks the channel 33. However, the channel 33 has at the top connections 36 on either side of the wall 32. These connections 36 can for instance be used to connect the channel 34 to a pipe or a hose 38 (cf. Figs. 8 and 9) for directing a flow of liquid from the liquid inlet 11 of the adapter 10 to the liquid outlet 12 of the adapter 10, whereby an optional unit can be easily connected to this pipe or hose 38.

Such an optional unit may, for example, be a flow meter 39, shown schematically in Figs. 8 and 9 in connection with a well pipe 3, which extends from a ground level 2 into the ground to a conduit insert 1, which according to the invention comprises an adapter 10, to which the well pipe 3 connects tightly, and a conduit access means 20, which corresponds to the fourth embodiment above. In this case, it is important to point out that the well pipe 3 must always have a diameter d1 which is larger than the largest horizontal dimension of the conduit access means 20. This is so that the conduit access means 20 can be lifted out of the well pipe 3 without hindrance and can be lowered into it.

The flow meter 39 can either, as illustrated in Figs. 8 and 9, be of a type which requires manual reading and is therefore connected with a long flexible hose 38, which enables lifting of the flow meter 39 to ground level 2, or of a remote readable type, which can mounted by means of a fixed pipe or a shorter hose. Regardless of the solution chosen, it is suitable to in cold climates removably insert in the well pipe a sheet 6 of a heat-insulating material into the well pipe 3 above the conduit access means 10 and also to always close the well pipe 3 by means of a safety cover 7.

In this context it should also be mentioned that it is also possible to connect a non-return valve corresponding to the previously described non-return valve 37 in the pipe or hose 38.

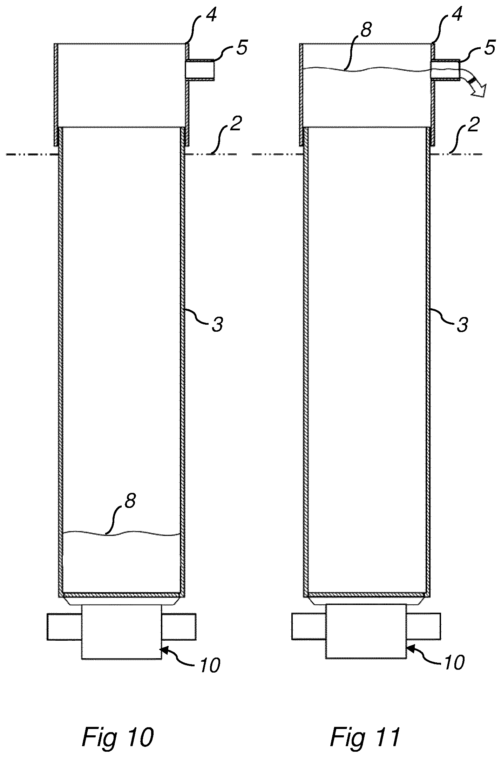

Figs. 10 and 11 show an attachment in the form of a pipe 4, which above ground 2 is tightly connectable to the well pipe 3 and on a side has an outlet 5. The pipe 4 with the outlet 5 is used in piping work, which includes insertion and extraction of a conduit access means 20 into and out of the chamber 13 and which according to the invention is accomplished while pressurized liquid 8 is allowed to flow into the adapter 10 and its chamber 13 via the liquid inlet 11. During such piping work the well pipe 3 can over time be completely filled with liquid and flooded. Then the outlet 5 comes in handy, because it makes it possible to divert the liquid away from the workplace, which thus can be kept dry. When the piping work has been completed and no more liquid flows into the well pipe 3, it is easily possible to empty the well pipe by means of a pump or preferably a wet vacuum cleaner.

## Claims

1. A conduit insert (1) intended to be used in a water supply system, said conduit insert comprising an adapter (10), a conduit access means (20) and a well pipe (3), wherein the adapter (10) is tightly connected to the well pipe (3), which has a diameter (d1) which is larger than the largest horizontal dimension of the conduit access means (20), said adapter (10) comprising a liquid inlet (11) and a liquid outlet (12) and between these a chamber (13) comprising a first planar end wall (14), in which the liquid inlet (11) opens, and an opposite second planar end wall (15), which is parallel to the first end wall (14) and in which the liquid outlet (12) opens, and an access opening (16) extending from the first planar end wall (14) of the chamber (13) to the second planar end wall (15) of the chamber, wherein the conduit access means (20) isslidable into and extractable out of the chamber (13) via the access opening (16) and comprises a first planar end face (24) and an opposite second planar end face (25) which is parallel to the first planar end face (24), wherein the first planar end face (24) is by means of an elastic annular seal (26) arranged in an annular groove (28) in the first planar end face (24) is arranged to tightly abut against the first planar end wall (14) of the chamber (1) around the liquid inlet (11), and wherein the second planar end face (25) is by means of an elastic annular seal (27) arranged in an annular groove (29) in the second planar end face (25) to tightly abut against the second planar end wall (15) of the chamber (1) around the liquid outlet (12), **characterized in that** the elastic annular seals (26, 27) are permanently attached to the annular grooves (28, 29) to enable insertion and extraction of the conduit access means (20) while pressurized liquid (8) flows into the adapter (10) and its chamber (13) via the liquid inlet (11), wherein the elastic annular seals (26, 27) are permanently fixed in the annular grooves (28, 29) in the end faces (24, 25) by the annular grooves (29) being undercut with a narrower annular opening (30) in respective end face (24, 25) and below the respective end faces (24, 25) a wider annular space (31), wherein the elastic annular seals (26, 27) are pressed into the respective annular grooves (28, 25) past the narrower annular openings (30) of the annular grooves (28, 29) to be permanently retained in the wider annular spaces (31) of the annular grooves (28, 29).

2. The conduit insert (1) according to claim 1, wherein the elastic annular seals (26, 27) are O-rings which have a larger cross-section than the width of the opening (30) of the annular groove (28, 29).

3. The conduit insert (1) according to claim 2, wherein, when seen in cross section, the annular groove (28, 29) is trapezoidal with the narrower annular opening (30) at the top and below a flat bottom which is wider than a cross section of an O-ring.

4. The conduit insert (1) according to any one of claims 1-3, wherein the chamber (13) of the adapter (10) comprises a first planar side wall (17) extending between the two end walls (14, 15) of the chamber (13), and an opposite second planar side wall (18), which extends between the two end walls (14, 15) of the chamber (13) and is parallel to the first side wall (18), wherein the access opening (16) extends from the first planar side wall (17) of the chamber (13) to the second planar side wall (18) of the chamber (13), wherein the conduit access means (20) comprises a first planar side wall portion (32) extending from the first end face (24) of the conduit access means (20) to the second end face (25) of the conduit access means (20), and an opposite second flat side wall portion (33) extending from the first end face (24) of the conduit access means (20) to the second end face (25) of the conduit access means (20) and parallel to the first side wall portion (32), and wherein beads (19) are arranged on the respective side wall (17, 18) of the chamber (13) near the end walls (14, 15), wherein the beads (19) extend from the access opening (16) into the chamber (13) and are arranged such that they upon insertion of the conduit access means (20) into the chamber (13) come into contact with the side wall portions (32, 33) of the conduit access means (20) to guide the conduit access means (20) into place in the chamber (13).

5. The conduit insert (1) according to any one of claims 1-4, wherein the adapter (10) is arranged to be located in the ground (2) and is tightly connected to the well pipe (3), which is arranged to extend above ground.

6. The conduit insert (1) according to claim 5, wherein a pipe (4), which on a side has a liquid outlet (5), above ground (2) is arranged to be connected to the well pipe (3).

7. The conduit insert (1) according to claim 5 or 6, wherein a plate (6) of heat-insulating material is arranged to be removably inserted into the well pipe (3) above the pipe access means (20).

8. The conduit insert (1) according to any one of claims 5-7, wherein the conduit access means (20) comprises a channel (34) extending between the two end faces (24, 25) of the conduit access means (20), wherein a non-return valve (37) is provided in the channel (33) for allowing or preventing a flow of liquid from the liquid inlet (11) of the adapter (10) to the liquid outlet (12) of the adapter (10) depending on the rotational position of the conduit access means (20).

9. The conduit insert (1) according to any one of claims 5-7, wherein the conduit access means (20) comprises a closed wall portion (35) arranged in and blocking a channel (34) extending between both end surfaces (24, 25) of the conduit access means (20), wherein the conduit access means (20) comprises connections (36) connecting the channel (34) to a pipe or hose (38) for directing a flow of liquid from the liquid inlet (11) of the adapter (10) to the liquid outlet (12) of the adapter (10).

10. The conduit insert (1) according to claim 9, wherein a flow meter (39), which fits into the well pipe (3), is connected in the pipe or hose (38).

11. The conduit insert (1) according to claim 10, wherein the pipe or hose (38) is a flexible hose, which has such a length that the flow meter (39) can be lifted out of the well pipe (3) without disconnecting the flexible hose.

12. The conduit insert (1) according to any one of claims 9-11, wherein a non-return valve is connected to the pipe or hose (38) to allow or prevent a flow of liquid from the liquid inlet (11) of the adapter (10) to the liquid outlet (12) of the adapter (10) dependent on a rotational position of the conduit access means (20).

13. A method for piping work involving a conduit insert (1) according to claim 1, wherein the pipeline insert (1) is located in the ground (2) and comprises a well pipe (3) according to claim 6, **characterized in that** piping work involving insertion and extraction of a conduit access means (20) into and out of the chamber (13) of the adapter (10) is performed while pressurized liquid (8) flows into the adapter (10) and its chamber (13) via the liquid inlet (11).

14. The method according to claim 13, wherein the well pipe (3), when a conduit access means (10) has been inserted into the chamber (13) of the adapter (10), is emptied of liquid (8) from above.

## Patentansprüche

1. Kanaleinsatz (1), vorgesehen zur Verwendung in einem Wasserversorgungssystem, der Kanaleinsatz aufweisend einen Adapter (10), ein Kanalzugangsmittel (20) und ein Schachtrohr (3), wobei der Adapter (10) eng mit dem Schachtrohr (3) verbunden ist, das einen Durchmesser (d1) aufweist, der größer ist als die größte horizontale Abmessung des Kanalzugangsmittels (20), wobei der Adapter (10) einen Flüssigkeitseinlass (11) und einen Flüssigkeitsauslass (12) und zwischen diesen eine Kammer (13) aufweist, die eine erste planare Endwand (14), in der sich der Flüssigkeitseinlass (11) öffnet, und eine entgegengesetzte zweite planare Endwand (15), die parallel zu der ersten Endwand (14) ist, und in der sich der Flüssigkeitsauslass (12) öffnet, aufweist, und wobei sich eine Zugangsöffnung (16) von der ersten planaren Endwand (14) der Kammer (13) zu der zweiten planaren Endwand (15) der Kammer erstreckt, wobei das Kanalzugangsmittel (20) über die Zugangsöffnung (16) in die Kammer (13) hinein und aus dieser herausschiebbar ist und eine erste planare Endfläche (24) und eine entgegengesetzte zweite planare Endfläche (25) aufweist, die parallel zu der ersten planaren Endfläche (24) ist, wobei die erste planare Endfläche (24) mittels einer elastischen Ringdichtung (26) in einer Ringnut (28) in der ersten planaren Endfläche (24) angeordnet ist, um eng an der ersten planaren Endwand (14) der Kammer (1) um den Flüssigkeitseinlass (11) anzustoßen und wobei die zweite planare Endfläche (25) mittels einer elastischen Ringdichtung (27) in einer Ringnut (29) in der zweiten planaren Endfläche (25) angeordnet ist, um eng an der zweiten planaren Endwand (15) der Kammer (1) um den Flüssigkeitsauslass (12) anzustoßen, **dadurch gekennzeichnet, dass** die elastischen Ringdichtungen (26, 27) dauerhaft an den Ringnuten (28, 29) befestigt sind, um das Einführen und Ausziehen des Kanalzugangsmittels (20) zu erlauben, während unter Druck stehende Flüssigkeit (8) über den Flüssigkeitseinlass (11) in den Adapter (10) und seine Kammer (13) fließt, wobei die elastischen Ringdichtungen (26, 27) dauerhaft in den Ringnuten (28, 29) in den Endflächen (24, 25) befestigt sind, indem die Ringnuten (29) mit einer schmaleren ringförmigen Öffnung (30) in der jeweiligen Endfläche (24, 25) unterschnitten sind, und unter den jeweiligen Endflächen (24, 25) ein zweiter ringförmiger Raum (31) vorhanden ist, wobei die elastischen Ringdichtungen (26, 27) an den engeren Ringöffnungen (30) der Ringnuten (28, 29) vorbei in die jeweiligen Ringnuten (28, 25) gepresst werden, um dauerhaft in den breiteren ringförmigen Räumen (31) der Ringnuten gehalten zu werden (28, 29).

2. Kanaleinsatz (1) nach Anspruch 1, wobei die elastischen Ringdichtungen (26, 27) O-Ringe sind, die einen größeren Querschnitt aufweisen als die Breite der Öffnung (30) der Ringnut (28, 29).

3. Kanaleinsatz (1) nach Anspruch 2, wobei die Ringnut (28, 29) im Querschnitt betrachtet trapezförmig ist und eine schmalere ringförmige Öffnung (30) oben und darunter einen flachen Boden aufweist, der breiter als ein Querschnitt eines O-Rings ist.

4. Kanaleinsatz (1) nach einem der Ansprüche 1 bis 3, wobei die Kammer (13) des Adapters (10) eine erste planare Seitenwand (17), die sich zwischen den beiden Endwänden (14, 15) der Kammer (13) erstreckt, und eine entgegengesetzte zweite planare Seitenwand (18), die sich zwischen den beiden Endwänden (14, 15) der Kammer (13) erstreckt und parallel zu der ersten Seitenwand (18) ist, aufweist, wobei sich die Zugangsöffnung (16) von der ersten planaren Seitenwand (17) der Kammer (13) zu der zweiten planaren Seitenwand (18) der Kammer (13) erstreckt, wobei das Kanalzugangsmittel (20) einen ersten planaren Seitenwandabschnitt (32), der sich von der ersten Endfläche (24) des Kanalzugangsmittels (20) zu der zweiten Endfläche (25) des Kanalzugangsmittels (20) erstreckt, und einen entgegengesetzten zweiten flachen Seitenwandabschnitt (33), der sich von der ersten Endfläche (24) des Kanalzugangsmittels (20) zu der zweiten Endfläche (25) des Kanalzugangsmittels (20) und parallel zu dem ersten Seitenwandabschnitt (32) erstreckt, und wobei Wülste (19) an der jeweiligen Seitenwand (17, 18) der Kammer (13) in der Nähe der Endwände (14, 15) angeordnet sind, wobei sich die Wülste (19) von der Zugangsöffnung (16) in die Kammer (13) erstrecken und so angeordnet sind, dass sie bei Einführen des Kanalzugangsmittels (20) in die Kammer (13) mit den Seitenwandabschnitten (32, 33) des Kanalzugangsmittels (20) in Kontakt kommen, um das Kanalzugangsmittel (20) in der Kammer (13) an seinen Ort zu führen.

5. Kanaleinsatz (1) nach einem der Ansprüche 1 bis 4, wobei der Adapter (10) so angeordnet ist, dass er in dem Boden (2) platziert wird und eng mit dem Schachtrohr (3) verbunden ist, das angeordnet ist, um sich über den Boden zu erstrecken.

6. Kanaleinsatz (1) nach Anspruch 5, wobei ein Rohr (4), das auf einer Seite einen Flüssigkeitsauslass (5) aufweist, über dem Boden (2) angeordnet ist, um mit dem Schachtrohr (3) verbunden zu werden.

7. Kanaleinsatz (1) nach Anspruch 5 oder 6, wobei eine Platte (6) aus wärmeisolierendem Material angeordnet ist um entfernbar in das Schachtrohr (3) über dem Rohrzugangsmittel (20) eingesetzt zu werden.

8. Kanaleinsatz (1) nach einem der Ansprüche 5 bis 7, wobei das Kanalzugangsmittel (20) einen Kanal (34) aufweist, der sich zwischen den beiden Endflächen (24, 25) des Kanalzugangsmittels (20) erstreckt, wobei ein Rückschlagventil (37) in dem Kanal (33) bereitgestellt ist, um abhängig von der Drehposition des Kanalzugangsmittels (20) einen Strom einer Flüssigkeit von dem Flüssigkeitseinlass (11) des Adapters (10) zu dem Flüssigkeitsauslass (12) des Adapters (10) zu erlauben.

9. Kanaleinsatz (1) nach einem der Ansprüche 5 bis 7, wobei das Kanalzugangsmittel (20) einen geschlossenen Wandabschnitt (35) aufweist, der in einem Kanal (34), der sich zwischen den beiden Endflächen (24, 25) des Kanalzugangsmittels (20) erstreckt, angeordnet ist und diesen blockiert, wobei das Kanalzugangsmittel (20) Verbindungen (36) aufweist, die den Kanal (34) mit einem Rohr oder mit einem Schlauch (38) verbinden, um einen Flüssigkeitsstrom von dem Flüssigkeitseinlass (11) des Adapters (10) zu dem Flüssigkeitsauslass (12) des Adapters (10) zu lenken.

10. Kanaleinsatz (1) nach Anspruch 9, wobei ein Durchflussmessgerät (39), das in das Schachtrohr (3) passt, in dem Rohr oder in dem Schlauch (38) angeschlossen ist.

11. Kanaleinsatz (1) nach Anspruch 10, wobei das Rohr oder der Schlauch (38) ein flexibler Schlauch ist, der eine solche Länge aufweist, dass das Durchflussmessgerät (39) ohne Trennen des flexiblen Schlauchs aus dem Schachtrohr (3) gehoben werden kann.

12. Kanaleinsatz (1) nach einem der Ansprüche 9-11, wobei ein Rückschlagventil mit dem Rohr oder mit dem Schlauch (38) verbunden ist, um abhängig von einer Drehposition des Kanalzugangsmittels (20) einen Flüssigkeitsstrom von dem Flüssigkeitseinlass (11) des Adapters (10) zu dem Flüssigkeitsauslass (12) des Adapters (10) zu erlauben oder zu verhindern.

13. Verfahren für Rohrarbeiten, umfassend einen Kanaleinsatz (1) nach Anspruch 1, wobei der Rohrleitungseinsatz (1) in dem Boden (2) platziert ist und ein Schachtrohr (3) nach Anspruch 6 aufweist, **dadurch gekennzeichnet, dass** die Rohrarbeiten, die das Einsetzen und Ausziehen eines Kanalzugangsmittels (20) in und aus der Kammer (13) des Adapters (10) umfassen, ausgeführt werden, während die unter Druck stehende Flüssigkeit (8) über den Flüssigkeitseinlass (11) in den Adapter (10) und seine Kammer (13) fließt.

14. Verfahren nach Anspruch 13, wobei das Schachtrohr (3), wenn ein Kanalzugangsmittel (10) in die Kammer (13) des Adapters (10) eingesetzt wurde, von oben von Flüssigkeit geleert wird (8).

## Revendications

1. Insert de conduit (1) prévu pour être utilisé dans une installation de distribution d'eau, ledit insert de conduit comprenant un adaptateur (10), un moyen d'accès au conduit (20) et une canalisation de puits (3), dans lequel l'adaptateur (10) est étroitement relié à la canalisation de puits (3) qui a un diamètre (d1) supérieur à la plus grande dimension horizontale du moyen d'accès au conduit (20), ledit adaptateur (10) comprenant une entrée de liquide (11) et une sortie de liquide (12) et entre ces deux une chambre (13) comprenant une première paroi d'extrémité plane (14), dans laquelle l'entrée de liquide (11) s'ouvre, et une seconde paroi d'extrémité plane (15) opposée, qui est parallèle à la première paroi d'extrémité plane (14) et dans laquelle la sortie de liquide (12) s'ouvre, et une ouverture d'accès (16) s'étendant de la première paroi d'extrémité plane (14) de la chambre (13) à la seconde paroi d'extrémité plane (15) de la chambre, dans lequel le moyen d'accès au conduit (20) peut être glissé dans et extrait de la chambre (13) via l'ouverture d'accès (16) et comprend une première face d'extrémité plane (24) et une seconde face d'extrémité plane (25) opposée qui est parallèle à la première face d'extrémité plane (24), dans lequel la première face d'extrémité plane (24), au moyen d'un joint annulaire élastique (26) disposé dans une rainure annulaire (28) dans la première face d'extrémité plane (24), est disposée de manière à buter fortement contre la première paroi d'extrémité plane (14) de la chambre (1) autour de l'entrée de liquide (11), et dans lequel la seconde face d'extrémité plane (25), au moyen d'un joint annulaire élastique (27) disposé dans une rainure annulaire (29) dans la seconde face d'extrémité plane (25), doit buter fortement contre la seconde paroi d'extrémité plane (15) de la chambre (1) autour de la sortie de liquide (12), **caractérisé en ce que** les joints annulaires élastiques (26, 27) sont attachés de façon permanente aux rainures annulaires (28, 29) afin de permettre l'insertion et l'extraction du moyen d'accès au conduit (20) pendant que du liquide sous pression (8) pénètre dans l'adaptateur (10) et sa chambre (13) via l'entrée de liquide (11), dans lequel les joints annulaires élastiques (26, 27) sont fixés de façon permanente dans les rainures annulaires (28, 29) dans les faces d'extrémité (24, 25) par les rainures annulaires (29) étant entaillées avec une ouverture annulaire (30) plus étroite sur les faces d'extrémité (24, 25) respectives et, sous les faces d'extrémité (24, 25) respectives, un espace annulaire (31) plus large, dans lequel les joints annulaires élastiques (26, 27) sont poussés dans les rainures annulaires (28, 25) respectives au-delà des ouvertures annulaires plus étroites (30) des rainures annulaires (28, 29) afin d'être retenus de façon permanente dans les espaces annulaires (31) plus larges des rainures annulaires (28, 29).

2. Insert de conduit (1) selon la revendication 1, dans lequel les joints annulaires élastiques (26, 27) sont des joints toriques ayant une section transversale supérieure à la largeur de l'ouverture (30) de la rainure annulaire (28, 29).

3. Insert de conduit (1) selon la revendication 2, dans lequel la rainure annulaire (28, 29), vue en section transversale, est trapézoïdale avec l'ouverture annulaire (30) plus étroite au sommet et en dessous un fond plat qui est plus large qu'une section transversale d'un joint torique.

4. Insert de conduit (1) selon l'une des revendications 1-3, dans lequel la chambre (13) de l'adaptateur (10) comprend une première paroi latérale plane (17) s'étendant entre les deux parois d'extrémité (14, 15) de la chambre (13), et une seconde paroi latérale plane (18) opposée qui s'étend entre les deux parois d'extrémité (14, 15) de la chambre (13) et est parallèle à la première paroi latérale (18), dans lequel l'ouverture d'accès (16) s'étend de la première paroi latérale plane (17) de la chambre (13) à la seconde paroi latérale plane (18) de la chambre (13), dans lequel le moyen d'accès au conduit (20) comprend une première portion de paroi latérale plane (32) s'étendant de la première face d'extrémité (24) du moyen d'accès au conduit (20) à la seconde face d'extrémité (25) du moyen d'accès au conduit (20), et une seconde portion de paroi latérale plane (33) opposée s'étendant de la première face d'extrémité (24) du moyen d'accès au conduit (20) à la seconde face d'extrémité (25) du moyen d'accès au conduit (20) et parallèle à la première portion de paroi latérale (32), et dans lequel des billes (19) sont disposées sur la paroi latérale (17, 18) respective de la chambre (13) à proximité des parois d'extrémité (14, 15), dans lequel les billes (19) s'étendent de l'ouverture d'accès (16) jusque dans la chambre (13) et sont disposées de manière à ce qu'elles entrent en contact avec les portions de paroi latérale (32, 33) du moyen d'accès au conduit (20) lors de l'insertion du moyen d'accès au conduit (20) dans la chambre (13) pour guider le moyen d'accès au conduit (20) en place dans la chambre (13).

5. Insert de conduit (1) selon l'une des revendications 1-4, dans lequel l'adaptateur (10) est disposé pour être situé dans le sol (2) et est solidement fixé à la canalisation de puits (3) qui est disposée pour s'étendre au-dessus du sol.

6. Insert de conduit (1) selon la revendication 5, dans lequel une canalisation (4), qui dispose d'une sortie de liquide (5) sur un côté, au-dessus du sol (2) est disposée pour être connectée à la canalisation de puits (3).

7. Insert de conduit (1) selon la revendication 5 ou 6, dans lequel une plaque (6) de matériau d'isolation thermique est disposée pour être insérée de manière amovible dans la canalisation de puits (3) au-dessus du moyen d'accès au conduit (20).

8. Insert de conduit (1) selon l'une des revendications 5-7, dans lequel le moyen d'accès au conduit (20) comprend un canal (34) s'étendant entre les deux faces d'extrémité (24, 25) du moyen d'accès au conduit (20), dans lequel un clapet anti-retour (37) est prévu dans le canal (33) pour permettre ou empêcher un flux de liquide de l'entrée de liquide (11) de l'adaptateur (10) vers la sortie de liquide (12) de l'adaptateur (10) en fonction de la position de rotation du moyen d'accès au conduit (20).

9. Insert de conduit (1) selon l'une des revendications 5-7, dans lequel le moyen d'accès au conduit (20) comprend une portion de paroi fermée (35) disposée dans et bloquant un canal (34) s'étendant entre les deux surfaces d'extrémité (24, 25) du moyen d'accès au conduit (20), dans lequel le moyen d'accès au conduit (20) comprend des raccords (36) connectant le canal (34) à une canalisation ou un tuyau (38) pour diriger un flux de liquide de l'entrée de liquide (11) de l'adaptateur (10) vers la sortie de liquide (12) de l'adaptateur (10).

10. Insert de conduit (1) selon la revendication 9, dans lequel un débitmètre (39), qui s'insère dans la canalisation de puits (3), est raccordé dans la canalisation ou le tuyau (38).

11. Insert de conduit (1) selon la revendication 10, dans lequel la canalisation ou le tuyau (38) est un tuyau flexible ayant une longueur telle que le débitmètre (39) peut être extrait de la canalisation de puits (3) sans débrancher le tuyau flexible.

12. Insert de conduit (1) selon l'une des revendications 9-11, dans lequel un clapet anti-retour est raccordé à la canalisation ou au tuyau (38) pour permettre ou empêcher un flux de liquide de l'entrée de liquide (11) de l'adaptateur (10) vers la sortie de liquide (12) de l'adaptateur (10) en fonction d'une position de rotation du moyen d'accès au conduit (20).

13. Procédé de travaux de tuyauterie impliquant un insert de conduit (1) selon la revendication 1, dans lequel l'insert de canalisation (1) est situé dans le sol (2) et comprend une canalisation de puits (3) selon la revendication 6, **caractérisé en ce que** les travaux de tuyauterie impliquant l'insertion et l'extraction d'un moyen d'accès au conduit (20) dans et hors de la chambre (13) de l'adaptateur (10) sont réalisés pendant que du liquide sous pression (8) coule jusque dans l'adaptateur (10) et sa chambre (13) via l'entrée de liquide (11).

14. Procédé selon la revendication 13, dans lequel la canalisation de puits (3) est vidée de son liquide (8) par le haut lorsqu'un moyen d'accès au conduit (10) a été inséré dans la chambre (13) de l'adaptateur (10).
